(19)

Europäisches
Patentamt
European
Patent Office
Office européen
des brevets

(11)     **EP 2 023 545 B1**

(12)     **EUROPEAN PATENT SPECIFICATION**

(45) Date of publication and mention
of the grant of the patent:
**28.10.2009  Bulletin 2009/44**

(51) Int Cl.:
***H04L 12/46*** *(2006.01)*

(21) Application number: **07114014.9**

(22) Date of filing: **08.08.2007**

(54) **VLAN data framing and transmission**

VLAN-Datenrahmen und -übertragung

Transmission et structure de données VLAN

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**11.02.2009  Bulletin 2009/07**

(73) Proprietor: **PacketFront Systems AB
164 40 Kista (SE)**

(72) Inventor: **Öman, Andreas
12846, BAGARMOSSEN (SE)**

(74) Representative: **Hyden, Martin Douglas
Rouse Patents
1st Floor
228-240 Banbury Road
Oxford
Oxfordshire OX2 7BY (GB)**

(56) References cited:
**EP-A- 1 039 698      US-B1- 6 680 945
US-B1- 6 885 657**

**Description**

Technical field

This invention relates to methods for framing data for transmission in VLAN data networks, and to methods of transmitting such data in such networks.

Background art

A virtual local area network, commonly known as a vLAN or as a VLAN, is a way of creating one or more independent logical networks within a physical network. A VLAN consists of a network of computers that behave as if connected to the same link layer network, even though they may actually be physically connected to different segments of a LAN. VLANs are configured through software rather than hardware, making them extremely flexible. One advantage of VLANs emerges when physically moving a computer to another location: it can stay on the same VLAN without the need for any hardware reconfiguration. Several VLANs can co-exist within a single physical network.

VLANs operate at the layer 2 (data link layer) of the OSI model. Users in a VLAN connect to the network via one or more layer 2 switches. These in turn connect to the wider network via distribution routers (or equivalent switches). Because the users in a given VLAN are logically on the same network, it is theoretically possible for there to be direct user-to-user communication without the need for routing or for the communication to pass through devices such as the distribution router with security function (e.g. firewalls). Such a communication path is inherently insecure and as such can be undesirable in networks to which the public have access.

The primary protocol currently used in configuring VLANs is IEEE 802.1Q, which describes how traffic on a single physical network can be partitioned into VLANs by tagging each frame or packet with extra bytes to denote the virtual network to which the packet belongs. For Ethernet frames using Ethernet II framing, 802.1Q sets the EtherType value in the Ethernet header to Tag Protocol ID (TPID) 0x8100, identifying this frame as an 802.1Q frame. It then inserts extra bytes of Tag Control Information (TCI) after the TPID, followed by other bytes containing the frame's original EtherType. The TCI includes a VLAN ID field (VID) indicating the particular VLAN to which a frame belongs. Together the TPID and TCI are called the VLAN Tag.

Previously, direct user-to-user communication has been prevented by configuring the switches such that data originating with a user (upstream traffic) is assigned a first VID and that data with this VID is not transmitted directly to a user, only to a distribution router. The distribution routers are configured to assign a second, different VID to data for transmission to a user connected to a VLAN (downstream traffic). Essentially, the system creates two VLANS: one for upstream traffic, and one for downstream traffic.

EP1039698 describes a frame tagging approach for VLAN identification in which a packet transmitted by a node is associated with one of multiple VLANs by way of the tag protocol identifier/virtual LAN identifier combination in the tag header inserted in the packet.

The use of the split VLAN described above leads to an asymmetric traffic flow. Where devices in the physical network have to interact with the data for routing, this is not necessarily a problem. However, problems can occur for physical devices that merely pass traffic on. It is therefore an object of the invention to provide a method of data framing that avoids the need to provide a split VLAN.

Disclosure of the invention

This invention provides a method of framing data for transmission to or from one of a number of users connected to a VLAN data network, comprising sending data from a first user to a first layer 2 switch; dividing the data in the first layer 2 switch into frames including a header and a payload, the header comprising a portion of one of two selectable values assigned according to whether the data is to be transmitted from or to a user, wherein the header comprises a VLAN tag including a Tag Protocol ID (TPID) portion and a Tag Control Information (TCI) portion, a first TPID value being assigned in the layer 2 switch to be indicative of data to be transmitted from the first user; forwarding the framed data from the first layer 2 switch to a distribution router comprising the VLAN; rframing the data in the distribution router so as to assign and a second, different, TPID value indicative of data to be transmitted to a second user; forwarding the reframed data from the distribution router to a layer 2 switch to which the second user is connected; transmitting the data from the second layer 2 switch to the second user.

The TCI portion typically includes a VLAN ID field specifying the VLAN to which the frame belongs.

By assigning the TPID value to indicate upstream or downstream traffic, it is possible to assign the same VLAN ID to frames for transmission to or from the same user in a specific VLAN.

In one embodiment, the first TPID value is assigned for data transmitted from a user at a layer 2 switch to which the user is connected (upstream traffic) and the second TPID value is assigned for data transmitted to a user at a distribution router forming part of the network to which the user is connected downstream traffic.

The first and second users can be connected to the same layer 2 switch or to different layer 2 switches.

Other changes can be made within the scope of the invention.

Brief description of the drawings

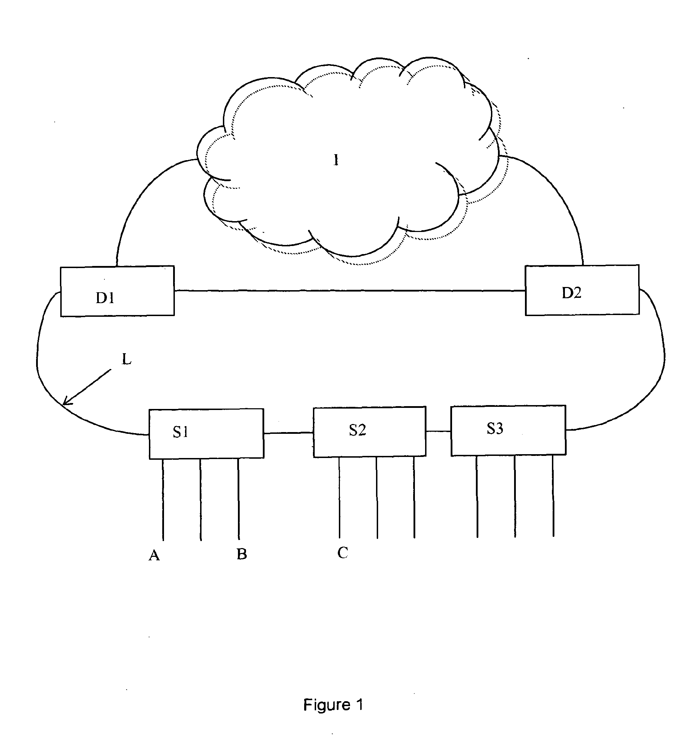

Figure 1 shows a schematic of an embodiment of a VLAN system to which the invention applies.

Mode(s) for carrying out the invention

In a simplified schematic data network shown in Figure 1, a number of users A, B, C, ... (i.e. computers) are connected to a network via respective layer 2 switches S1, S2, S3 etc. The layer 2 switches S are connected to each other and to a network core (Internet) I via distribution routers D1, D2 to form a loop L. The distribution routers D1, D2 are also connected to each other. As will be appreciated, the actual physical structure of the network may be much more complex that shown here but the overall functional relationship between the various parts remains essentially the same.

A VLAN V is defined to include users A, B and C. As can be seen, user C is connected to a different layer 2 switch (S2) to users A and B (S1). Other users are either part of other VLANs or are directly connected to the network on their own.

Data for transmission over the VLAN includes a frame header which is attached to a data payload and provides information to allow its transmission on the network and delivery to the intended address. The header H will include a destination address (i.e. where the data is to be sent) portion DST, a source address (i.e. where the data originated) portion SRC, and an EtherType portion ET. For Ethernet frames using Ethernet II framing, 802.1Q sets the EtherType value in the Ethernet header to Tag Protocol ID (TPID) 0x8100, identifying this frame as an 802.1Q frame. It then inserts extra bytes of Tag Control Information (TCI) after the TPID, followed by other bytes containing the frame's original EtherType. The TCI includes a VLAN ID field (VID) indicating the particular VLAN to which a frame belongs. Together the TPID and TCI are called the VLAN Tag. The payload P follows this header. The basic structure of the header is:

[DST][SRC][ET(TPID=0x8100)(TCI(VID))][other header values].

In order to prevent direct communication via the layer 2 switch(es) using the conventional technique discussed above, the first layer 2 switch assigns a first VID for upstream traffic. Any layer 2 switch receiving this data frame will only pass it upstream and so prevents direct communication with another user (who would be downstream of the switch).

When the data frame reaches the distribution router D upstream of the desired recipient, the router D amends the header to have a new VID indicative of downstream traffic. Thus, when the frame reaches the layer 2 switch S, it is passed on to the correct user according to the destination address.

As is discussed above, this use of two VIDs means that traffic is essentially running on two separate VLANs, but with asymmetric traffic flows. This invention provides a technique by which a single, logical VLAN can accommodate both upstream and downstream traffic. The invention allows assignment of different TPID values according to whether traffic is upstream or downstream. For example, an upstream header applied at the layer 2 switch can have the following structure:

[DST][SRC][ET(TPID=0x8100)(TCI(VID))][other header values]

while the downstream header applied at the distribution router can have the structure:

[DST][SRC][ET(TPID=0x9100)(TCI(VID))][other header values].

In both cases, the same VID is used, meaning that the assigned VLAN has both upstream and downstream traffic, unlike the asymmetric traffic flow of the conventional technique described above.

In the case of the present invention, the layer 2 switches respond to the different TPID values in a similar way to the different VID values of the conventional technique. Consequently, a layer 2 swtich receiving a frame with a TPID value indicating upstream traffic (assigned by the originating layer 2 switch) will only forward the frame on towards the distribution router, whereas a layer 2 switch receiving a frame with a TPID value indicating downstream traffic (assigned by the distribution router) is permitted to pass this on to the addressed, directly-connected user (DST address).

Since the same VID (VLAN) is used for both upstream and downstream traffic, the number of separately available VLANS for a given system is twice what it would be using the conventional technique, thus providing greater capacity and flexibility.

Other changes can be made while remaining within the scope of the invention.

**Claims**

1. A method of framing data for transmission to or from one of a number of users connected to a VLAN data network, comprising:

   sending data from a first user (A) to a first layer 2 switch (S);
   dividing the data in the first layer 2 switch (S) into frames including a header and a payload, the header comprising a portion of one of two selectable values assigned according to whether the data is to be transmitted from or to a user, wherein the header comprises a VLAN tag including a Tag Protocol ID (TPID) portion and a Tag Control Information (TCI) portion, a first TPID value being assigned in the layer 2 switch (S) to be indicative of data to be transmitted from the first user (A);
   forwarding the framed data from the first layer 2 switch (S) to a distribution router (D1) comprising the VLAN;
   re-framing the data in the distribution router (D1) so as to assign a second, different, TPID value indicative of data to be transmitted to a second user (B); forwarding the re-framed data from the distribution router (D1) to a layer 2 switch (S) to which the second user is connected;
   transmitting the data from the second layer 2 switch (S) to the second user (B).

2. A method as claimed in claim 1, wherein the TCI portion includes a VLAN ID field specifying the VLAN to which the frame belongs.

3. A method as claimed in claim 1 or 2, comprising assigning the same VLAN ID to frames for transmission to or from the same user in a specific VLAN.

4. A method as claimed in any preceding claim, comprising assigning the first EtherType value for data transmitted from the first user at the layer 2 switch (S) to which the first user is connected.

5. A method as claimed in any preceding claim comprising assigning the second EtherType value for data transmitted to the second user at a distribution router (D1) forming part of the network to which the second user is connected.

6. A method as claimed in any preceding claim, wherein the first and second users are connected to the same layer 2 switch or to different layer 2 switches.

**Patentansprüche**

1. Verfahren zum Framen von Daten zur Übertragung zu oder von einer Anzahl von mit einem VLAN-Datennetzwerk verbundenen Benutzern, mit den folgenden Schritten:

   Senden von Daten von einem ersten Benutzer (A) zu einem ersten Layer 2 Switch (S);
   Aufteilen der Daten in dem ersten Layer 2 Switch (S) in Frames mit einem Header und einem Payload, wobei der Header einen Teil von einem von zwei wählbaren Werten umfasst, die dementsprechend, ob die Daten von oder zu einem Benutzer zu senden sind, zugewiesen werden, wobei der Header ein VLAN-Tag mit einem Teil der Tag Protocol ID (TPID) und einen Teil der Tag Control Information (TCI) umfasst, wobei dem Layer 2 Switch (S) ein erster TPID-Wert zugewiesen wird, um von dem ersten Benutzer (A) zu übertragende Daten anzuzeigen;
   Weiterleiten der geframten Daten von dem ersten Layer 2 Switch (S) zu einem Verteilungs-Router (D1), der das VLAN umfasst;
   Umframen der Daten in dem Verteilungs-Router (D1), um so einen zweiten, anderen TPID-Wert zuzuweisen, der zu einem zweiten Benutzer (B) zu übertragende Daten anzeigt;
   Weiterleiten der umgeframten Daten von dem Verteilungs-Router (D1) zu einem Layer 2 Switch (S), mit dem der zweite Benutzer verbunden ist;

Übertragen der Daten von dem zweiten Layer 2 Switch (S) zu dem zweiten Benutzer (B).

**2.** Verfahren nach Anspruch 1, wobei der TCI-Teil ein VLAN-ID-Feld enthält, das das VLAN spezifiziert, zu dem der Frame gehört.

**3.** Verfahren nach Anspruch 1 oder 2, bei dem Frames zur Übertragung zu oder von demselben Benutzer in einem spezifischen VLAN dieselbe VLAN ID zugewiesen wird.

**4.** Verfahren nach einem der vorhergehenden Ansprüche, bei dem für von dem ersten Benutzer an dem Layer 2 Switch (S), mit dem der erste Benutzer verbunden ist, übertragene Daten der erste EtherType-Wert zugewiesen wird.

**5.** Verfahren nach einem der vorhergehenden Ansprüche, bei dem für zu dem zweiten Benutzer an einem Verteilungs-Router (D1), der einen Teil des Netzwerks bildet, mit dem der zweite Benutzer verbunden ist, übertragene Daten der zweite EtherType-Wert zugewiesen wird.

**6.** Verfahren nach einem der vorhergehenden Ansprüche, wobei der erste und der zweite Benutzer mit demselben Layer 2 Switch oder mit verschiedenen Layer 2 Switches verbunden sind.

## Revendications

**1.** Procédé de verrouillage de données en vue d'une transmission vers ou depuis un utilisateur parmi un certain nombre d'utilisateurs reliés à un réseau de données de type VLAN comprenant :

envoyer des données depuis un premier utilisateur (A) vers un premier commutateur (S) de couche 2, diviser les données dans le commutateur (S) de couche 2 en trames incluant un en-tête et une charge utile, l'en-tête comprenant une partie d'une parmi deux valeurs pouvant être sélectionnées affectées en fonction de ce que les données doivent être transmises depuis ou vers un utilisateur, dans lequel l'en-tête comprend une balise de réseau VLAN incluant une partie d'identificateur de protocole à balises (TPID) et une partie d'informations de commande de balises (TCI), une première valeur TPID étant affectée dans le commutateur (S) de couche 2 pour indiquer les données à transmettre depuis le premier utilisateur (A), propager les données en trames depuis le premier commutateur (S) de couche 2 à un routeur de répartition (D1) comprenant le réseau VLAN, verrouiller à nouveau les données dans le routeur de répartition (D1) de façon à affecter une seconde valeur TPID, différente, qui indique les données à transmettre à un second utilisateur (B), propager les données verrouillées à nouveau depuis le routeur de répartition (D1) à un commutateur (S) de couche 2 auquel est relié le second utilisateur, transmettre les données depuis le second commutateur (S) de couche 2 au second utilisateur (B).

**2.** Procédé selon la revendication 1, dans lequel la partie d'informations TCI inclut un champ identificateur de réseau VLAN spécifiant le réseau VLAN auquel appartient la trame.

**3.** Procédé selon la revendication 1 ou 2, comprenant l'affectation du même identificateur de réseau VLAN à des trames en vue d'une transmission vers ou depuis le même utilisateur dans un réseau VLAN spécifique.

**4.** Procédé selon l'une quelconque des revendications précédentes, comprenant l'affectation de la première valeur de champ EtherType pour des données transmises depuis le premier utilisateur au commutateur (S) de couche 2 auquel est relié le premier utilisateur.

**5.** Procédé selon l'une quelconque des revendications précédentes, comprenant l'affectation de la seconde valeur de champ EtherType pour des données transmises vers le second utilisateur au niveau d'un routeur de répartition (D1) faisant partie du réseau auquel est relié le second utilisateur.

**6.** Procédé selon l'une quelconque des revendications précédentes, dans lequel les premier et second utilisateurs sont reliés au même commutateur de couche 2 ou à des commutateurs différents de couche 2.

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1039698 A